# EUROPEAN PATENT SPECIFICATION

(11) **EP 3 774 241 B1**
(45) Date of publication and mention of the grant of the patent: **31.05.2023**
(21) Application number: 18723414.1
(22) Date of filing: 13.04.2018
(51) Int. Cl.: B27K 3/02, B27K 3/34, C08H 8/00, B01D 11/02

(54) **ACETYLATED WOOD AND METHOD OF MAKING SAME**
ACETYLIERTES HOLZ UND VERFAHREN ZUR HERSTELLUNG DAVON
BOIS ACÉTYLÉ ET SON PROCÉDÉ DE FABRICATION

(43) Date of publication of application: 17.02.2021
(60) Divisional application: 23167029.0
(73) Proprietor: Tricoya Technologies Ltd, London WC2E 7EN (GB)
(72) Inventor: KAPPEN, Theodorus Gerardus Marinus Maria, London WC2E 7EN (GB); VAN DOMMELE, Stefan, London WC2E 7EN (GB)
(74) Representative: V.O.
(86) International application number: PCT/EP2018/059562
(87) International publication number: WO 2019/197041

(56) References cited:
- EP-A1- 1 491 305
- EP-A1- 3 006 645
- WO-A1-2010/151320
- WO-A1-2013/045551
- JP-A- 2007 084 769
- US-A- 3 094 431
- US-A1- 2014 311 693
- US-A1- 2014 322 766
- TAO SONG ET AL: "Effects of pH control with phthalate buffers on hot-water extraction of hemicelluloses from spruce wood", BIORESOURCE TECHNOLOGY, ELSEVIER, AMSTERDAM, NL, vol. 102, no. 22, 22 August 2011 (2011-08-22), pages 10518-10523, XP028320061, ISSN: 0960-8524, DOI: 10.1016/J.BIORTECH.2011.08.093 [retrieved on 2011-08-27]
- Otto Horn: "Zur Acetylierung des Buchenholzes", BERICHTE DER DEUTSCHEN CHEMISCHEN GESELLSCHAFT ABTEILUNG B:ABHANDLUNGEN, vol. 61, no. 11, 5 December 1928 (1928-12-05), pages 2542-2545, XP055674605, DE ISSN: 0365-9488, DOI: 10.1002/cber.19280611122

## Description

### Field of the Invention

The invention is in the field of acetylation of lignocellulosic materials, such as wood, including solid wood, wood veneers, and wood elements, such as wood chips or fibres. The invention pertains to a process for acetylating wood and acetylated wood thereby obtainable.

### Background of the invention

In order to produce lignocellulosic materials, such as wood-based materials, with a long service life, it has been known to chemically modify the wood and in particular to acetylate the wood. Thereby materials with improved material properties, e.g. dimensional stability, hardness, durability, etc., are obtained. Wood mentioned throughout the description is selected from the group consisting of wood elements and solid wood.

A background reference is WO 2009/095687. Herein a process is described for the acetylation of wood, comprising the steps of submerging wood into an acetylation liquid in a reaction pressure vessel, conducting an impregnation procedure, removing excess acetylation fluid, introducing an inert fluid (typically nitrogen gas, the inert fluid possibly comprising non-inert acetic anhydride and/or acetic acid) into the vessel, circulating and heating the inert fluid following a heating regime so as to bring about suitable acetylation of the wood, and removing the circulating fluid and allowing the acetylated wood to cool.

Another background reference is WO 2013/139937. This disclosure addresses the general difficulty to obtain high acetylation degrees for wood, and particularly for wood elements. WO 2013/139937 addresses this with a focus on the impregnation step. A further reference aiming to achieve high acetyl contents is WO 2016/008995. Therein the focus is on optimizing the acetylation step.

Further background art includes WO 2010/151320 and EP149130 5, both of which relate to processes for the acetylation of wood possibly involving solvent-drying of the wood.

It will be understood that acetyl contents is, ultimately, a technical measure serving to achieve the overriding goal of such favourable wood properties as durability and dimensional stability. It would in fact be desired, in marked deviation from the prior art, to achieve such properties with a lower acetyl content.

### Summary of the Invention

In one aspect, the invention presents a process for the acetylation of soft wood, comprising providing soft wood (such as in the form of wood elements), subjecting the wood to an extraction step so as to provide extracted wood (particularly hemicellulose-reduced wood), and subjecting the extracted wood to contact with an acetylation agent. Thereby the extraction step comprises contacting the wood with an extraction fluid having a pressure and temperature so as to conduct the extraction at a temperature of from 120°C to 250°C, preferably 140°C to 160°C, wherein the extraction fluid is water, and wherein the wood is dried before impregnation with acetylation fluid.

### Brief Description of the Drawings

Fig. 1 is a graph representing EMC (equilibrium moisture content) of wood elements (untreated, acetylated, and extracted and acetylated) against acetyl content.
Fig. 2 is a graph representing linear swell (tangential direction) of wood elements (untreated, acetylated, and extracted and acetylated) against acetyl content.

### Detailed Description of the Invention

In a broad sense, the invention is based on the judicious insight to shift, in wood elements to be acetylated, the relative balance of the components that are capable of undergoing acetylation, towards lignin and cellulose. Accordingly, the wood to be acetylated is first subjected to extraction of hemicellulose.

Without wishing to be bound by theory, the inventors acknowledge that, due to the extraction of a large part of the hemicellulose the acetylation runs in an unexpected and advantageous way. E.g., the acetyl content for the extracted wood is significantly lower as compared to the non-extracted wood, but properties such as dimensional stability (linear swelling under moisture) are at the same level. Thus the swelling of wood according to the invention, having e.g. 14% acetyl content, is similar to that of a conventional acetylated wood elements, typically having 19% acetyl content.

The acetylated wood of the invention exhibits further interesting, and unexpected behaviour. This is reflected, e.g., in the equilibrium moisture content (EMC). In the field, the EMC is indirectly seen as a measure for the durability, with a lower EMC corresponding to a higher durability. As a result of the process of the invention, the resulting acetylated wood has a lower EMC, at a lower acetyl content (e.g. 14%), than standard material (which typically has a 19% acetyl content).

The extraction step of the invention also results in process advantages. E.g., the preceding extraction enables a faster process, because the desirable acetyl contents can be lower (e.g. 14%), and will be reached faster than the higher acetyl contents in conventional acetylation. E.g., by comparison, the standard material (wood elements) needs, e.g., 4 hours at 130°C to get to a typical 19% acetyl content. With the corresponding extracted material, the corresponding desirable acetyl content (14%) - resulting in similar EMC values and dimensional stability - is reached within 60 minutes at 130°C.

The wood to be extracted and acetylated by the process of the invention is either wood elements or solid wood, and includes also wood veneers. The wood elements can preferably be, e.g., wood chips, wood strands, wood particles. The process can however, surprisingly, be applied to solid wood or veneers. The wood belong to non-durable soft wood species such as, for example, coniferous trees, typically spruce, pine or fir. Non-limiting examples of suitable types of wood are spruce, sitka spruce, maritime pine, scots pine, radiata pine, eucalyptus, red alder, European alder, beech, birch. loblolly pine, lodgepole pine, pitch pine, red pine, Southern yellow pine, Japanese cedar (sugi), and hemlock.

Typical dimensions of wood elements as defined in accordance with the present invention are given in the following table.

**Table 1**

| wood element | length (mm) | | width (mm) | | thickness (mm) | |
|---|---|---|---|---|---|---|
| | from | to | from | to | from | to |
| Chips | 5 | 75 | 5 | 50 | 1,5 | 25 |
| Strands splinters (slivers) | 20 | 120 | 5 | 40 | 0,25 | 1,5 |
| | 5 | 75 | 0,15 | 0,5 | 0,15 | 0,5 |
| Particles | 1,5 | 20 | 0,15 | 5 | 0,15 | 5 |
| Fibre bundles | 1,5 | 25 | 0,15 | 0,5 | 0,15 | 0,5 |
| Fibres | 1 | 5 | 0,05 | 0,1 | 0,05 | 0,1 |

In some embodiments, the wood elements have a length 1.0-75 mm, a width of 0.05-75mm and a thickness of 0.05-15 mm.

In alternative embodiments, the wood is solid wood or veneers of wood and preferably has a length or width of at least 8 cm. The thickness preferably is at least 1mm. In some embodiments, the wood has a width of 2 cm to 30 cm, a thickness of 2 cm to 16 cm and a length of from 1.5 to 6.0 m. In other embodiments, the wood has a thickness of at least 1mm, a width of 20 cm - 2.5 m and length of 20cm to 6m

The process of the invention is surprisingly well applicable to solid wood, wood elements, and wood veneers. The benefits of the process of the invention are exhibited to a great extent in the event of wood elements, such as chips, strands, or particles. Most preferably, the wood elements are wood chips. Wood elements of a single size range are preferred to facilitate a homogeneous mass flow. Surprisingly, the process of the invention can also be applied to wood veneers and, particularly to solid wood (such as wood beams, planks or boards), without substantially affecting the dimensional stability of such solid wood. It will be understood that the removal of components, such as hemicelluloses, from wood, affects the integrity of the wood. In the event of solid wood products, such as beams or planks, the dimensions of such wood products would generally be expected to be adversely effected by the removal of components (e.g., the wood will more easily deviate from a desired straight shape, and/or the structure of the wood will become more brittle). Unexpectedly, however, the acetylated extracted wood results in products having an undiminished dimensional stability, and not showing increased brittleness.

The process of the invention is generally conducted in accordance with optimized acetylation processes as are known in the field. Preferred processes comprise the following steps:
- Providing wood elements;
- Controlling the moisture content of the wood elements; It will be understood that, in view of the extraction step conducted in accordance with the present invention, the wood will generally be fully wet as a result of extraction, and will be dried to a desired moisture content before impregnation with acetylation fluid.
- Impregnating the wood elements with acetylation fluid;
- Subjecting the impregnated wood elements to one or more heating steps in order to effectuate acetylation of the wood elements;
- Separating the acetylated wood elements from excess acetylation fluid.

The acetylated wood elements so obtained can be either processed further directly (e.g., in the event that the making of panels comprising acetylated wood elements is conducted in-line with the acetylation process), or they can be worked-up (such as by drying) for storage and/or transport.

In the present invention, the wood is subjected to extraction prior to being brought into contact with acetylation fluid. I.e., in preferred processes comprising a step in which the wood to be acetylated is impregnated with acetylation fluid, the extraction is conducted prior to such impregnation.

The extraction step is conducted so as to aim at extracting fractions comprising hemicelluloses from the wood. The extraction is conducted using water as the extraction liquid. The water can be pure water, such as tap water or demineralised water, or it can be a dilute salt solutions (e.g. water containing ammonium oxalate or sodium sulphite).

It is noted, as the skilled person will understand, that the extraction step will result in extracting any other extractables, in addition to hemicelluloses. This is believed not to be imperative to the invention. It is known that the major chemical components of wood are lignin , cellulose, and various hemicelluloses. The hemicelluloses are a generally undefined fraction, the exact chemical composition of which will differ per wood species. For ease of reference, the extraction step is referred to as extracting hemicelluloses. Yet the result of the extraction step of the invention, is believed to have its importance in shifting the balance of the wood components to be acetylated to lignin and cellulose. As compared to the composition of the corresponding native wood, the hemicellulose content of the wood elements in the present invention is reduced by an amount of up to 50%, such as 10-40%, such as 20-30%, such as about 25%. Accordingly, the relative amounts of cellulose and lignin present in the wood to be acetylated (and thus also in the resulting acetylated wood) have each increased by up to 25%, such as 5-20% each, such as 10-15% each, such as 12,5% each.

The chemical composition of some wood species is known as follows (ref. Sjostrom, E., Wood Chemistry. Fundamentals and Applications. Second edition ed. 1993, San Diego: Academic press. 292):

**Table 2: chemical composition of wood species**

| Constituent | | Scots Pine *(Pinus sylvestris)* | Spruce *(Picea glauca)* | Eucalyptus *(Eucalyptus camaldulensis)* | Silver Birch (*Betula verrucosa)* |
|---|---|---|---|---|---|
| Cellulose (%) | | 40 | 39.5 | 45.0 | 41.0 |
| Hemicellulose | | | | | |
| | -Glucomannan (%) | 16.0 | 17.2 | 3.1 | 2.3 |
| | -Glucuronoxylan (%) | 8.9 | 10.4 | 14.1 | 27.5 |
| | -Other polysaccharides (%) | 3.6 | 3.0 | 2.0 | 2.6 |
| Lignin (%) | | 27.7 | 27.5 | 31.3 | 22.0 |
| Total extractives (%) | | 3.5 | 2.1 | 2.8 | 3.0 |

The extraction is a hot water extraction. This refers to process that is well-established in the art. The regular purpose thereof is to obtain extractables from wood, and use these for other purposes as bio-based chemicals. The present invention, however, judiciously applies the process of hot water extraction with a view to the remaining extracted wood, which is then subjected to acetylation. Hot water extraction is generally conducted at temperatures of 100°C to 250°C, such as of from 120°C to 180°C, such as about 160°C). It will be understood that these temperatures imply an elevated pressure, typically in a range of from 2 barg to 8 barg, such as 4-6 barg, such as about 5 barg).

In an interesting embodiment, the extraction fluid, i.e., hot water, is applied to the wood elements by means of an impregnation process, particularly a Bethel impregnation process. Therein, the wood elements to be subjected to extraction are placed in a vacuum chamber and vacuum is applied to draw air from the wood. The extraction fluid (i.e., water) is then added to the chamber under vacuum. After filling the chamber with liquid a pressure generally up to 250 pounds per square inch (psi) can be applied, preferably 150 psi to 200 psi. The pressure is removed so that the wood is again subject to atmospheric pressure. This type of process is regularly preferred, since it should normally result in a maximum impregnation load, which is believed to have a direct relation to a desired maximum acetyl level. Typically, the heating of the water, with appropriate pressurization, is conducted after the completion of the impregnation process. The extraction fluid is allowed to stay in contact with the wood elements, under the aforementioned conditions (typically in an autoclave) for a duration of generally 1 to 10 hours, such as 2 to 8 hours, such as 4 to 6 hours, e.g., about 5 hours. In addition to this batch extraction process, alternative extraction processes - like continuous extraction - can also be used.

After conclusion of the extraction, the extraction fluid, with the extractables contained therein, is removed. Before acetylation, the extracted wood elements are typically subjected to a step allowing the moisture content of the wood elements to be controlled. Generally, a desirable moisture content before acetylation is less than 15% by weight. Since the process of the invention involves extraction by water, controlling the moisture content comprises a drying step. Such drying can be done in a continuous or batch process by any method known in the wood industry. Preferably, the moisture content of the wood is brought to a value of less than 8%, such as in a range of from 0.01% to 5%, such as in a range of from 0.5% to 4%.

The acetylation process itself can be conducted, as known in the art, using liquid and/or gaseous acetylation fluid. Typical acetylation fluids are acetic acid, acetic anhydride, and mixtures thereof. Preferably the initial acetylation fluid used is acetic anhydride (as a result of the acetylation reaction, the composition of the acetylation fluid will change during the process, since acetic acid is thereby formed). Typically, contacting of the extracted wood elements with acetylation fluid, comprises again an impregnation step (such as with acetic anhydride).

In an interesting embodiment, this impregnation step comprises a Bethel type impregnation process as discussed above with reference to the extraction step. However, in the event that maximum acetylation fluid uptake after impregnation is not a primary goal, more economical impregnation processes can also be used. Examples thereof, known to the person skilled in the art of wood impregnation, are the so-called Lowry and Rueping processes. These processes require no initial vacuum. Instead, the impregnation fluid is forced deep into the wood under pressure. The compressed gas inside the wood then expands when the pressure is released, causing any excess preservative to be forced out of the wood. As mentioned above, an advantage of the process of the present invention is that lower acetyl contents are required for obtaining desirable product properties. Accordingly, the invention also allows the use of more economical impregnation processes.

In interesting embodiments, the acetylation is conducted in accordance with any one of the acetylation processes as described in WO2009/095687, WO2011/95824, WO2013/117641, WO2013/139937, or WO2016/008995. E.g., a preferred process for obtaining high acetyl contents is a three-stage process as described in WO2016/008995. An advantage of the present invention, is that the process time for the acetylation can be considerably reduced as compared to the process of WO2016/008995.

Acetylation reactions are generally conducted at temperatures of from 120°C to 200°C, such as 160°C to 180°C. Preferably, the acetylation process for the extracted wood elements in accordance with the invention is conducted in a single heating step, at a temperature range generally below the existing optimized ranges in the art (such as at a temperature of from 120°C to 150°C, preferably 130°C to 140°C) for a duration that is generally shorter than the existing optimized durations in the art (such as for a period of 20 minutes to 1 hour, preferably 30-40 minutes). The skilled person will be able, for a given reactor equipment and depending on the wood species to be acetylated, to optimize the time and temperature conditions chosen. Particularly, the present disclosure thereby serves to apprise the skilled person of the fact that lower acetyl contents are required than for optimized processes in the art. The skilled person will be able to adapt the known conditions accordingly.

It should be noted that in determining wood acetylation degrees, two different approaches exist in the field. One is based on WPG (Weight Percentage Gain). WPG compares a sample (of wood after extraction) before and after acetylation treatment, and as a result any substances added (and any residues still present in the wood) increase the value. WPG is explained in the following formula: WPG = (M_{increase}/ M _{sample before reaction}) × 100%. Herein M stands for mass, and M_{increase}= M _{sample after reaction} - M _{sample before} reaction).

The other approach, is to actually measure the acetyl content (AC). This is given as AC = (M _{acetyls} / M _{sample after reaction}) × 100%. Typically HPLC (high-pressure liquid chromatography) can be used to quantify the acetate ion concentrations resulting from the saponification of acetyl groups from the wood. From this the overall mass of the acetyl groups after acetylation can be taken as M _{acetyls.}

The different results for WPG and AC can be explained with reference to the following theoretical example: a sample of, e.g., 1 g of wood is acetylated and after the reaction has a mass of 1.25 g. Thus M _{acetyls} is 0.25 g. The resulting WPG is: (1.25-1.00)/1.00 * 100% = 25%. Calculated as acetyl content, AC is = (1.25-1.00)/1.25 * 100% = 20%.

Hence, care should be taken not to directly compare degrees of acetylation expressed in WPG with degrees of acetylation expressed in AC. In the present description AC values are elected to identify the degree of acetylation.

Preferred acetyl contents (AC) to be obtained for the acetylated extracted wood elements in accordance with the invention, are 8-16%, preferably 10-15%, more preferably at 13- 14%.

In marked distinction from acetylated native wood (non-extracted wood elements) is that at such lower percentages of acetyl contents, the wood elements have a dimensional stability generally of the same order of magnitude as acetylated non-extracted wood having an acetyl content of 2-8% higher, particularly of 4-6% higher, and most typically of 5% higher. This discriminates the wood elements obtainable by the process of the invention, from wood elements obtainable by the existing processes.

In an embodiment, the process of the invention provides acetylated wood elements. The acetylated wood elements produced by the process of the invention can thereby be distinguished from standard acetylated wood elements, by the visible results of the extraction step conducted prior to the acetylation. Thus, standard acetylated wood elements not obtained by the process of the present invention, are characterized by having the native composition of the wood, particularly comprising lignin, cellulose, and hemicelluloses, in an acetylated form. Acetylated wood elements obtained by the process of the present invention, can be distinguished from said standard acetylated wood elements, *inter alia,* by having a composition in which, as compared to the corresponding native wood, the relative amounts of lignin and cellulose have increased (as a result of removing extractables and, particularly, hemicelluloses). Interestingly, extraction typically also removes terpenes and other pine resins, which comes with several further benefits, such as the possibility of providing wood with a lighter colour.

In an interesting aspect, the wood elements produced by the method of the invention can be characterized as being acetylated wood elements exhibiting a dimension stability reflected by a linear swell of up to 2%, at an acetyl content of 10-15%. The linear swell is determined according to procedures known in the art, as described in the examples.. Due to the growth of a tree, three different directions/orientations are defined in wood, being tangential, radial and longitudinal. Wood shrinks and swells the largest amount in the tangential direction; the tangential swell is typically ca. twice as big as the swell in the radial direction. The longitudinal swell is typically about 0.1-0.2% of that of the tangential swell, thus being virtually nil. In the present disclosure, the linear swell is measured in the tangential direction, as this is the largest swell.

Acetylated wood elements made according to the present invention can be used as a component of boards or panels. Such boards or panels generally comprise wood elements, held together by a binder, such as a resin. This refers to technology and resin materials well-established in the art. The present invention, whilst further relying on the art for the making of such panels, adds the benefits of using acetylated wood elements that have the aforementioned desirable properties, at the aforementioned relatively low acetyl contents. In making such boards, particular MDF (medium density fibre board panels), the wood elements of the invention may usefully be refined (e.g. so as to produce acetylated wood fibres from acetylated wood chips). The acetylated wood elements, as such or refined, can thus be converted to board, such as medium density fibreboard, MDF, or oriented strand board, OSB, or particle board. These boards will possess the superior dimensional stability, durability, stability to ultra-violet light and thermal conductivity, compared with board derived from non-acetylated wood elements. Particularly, these boards possess these properties as do existing boards made with acetylated wood elements, yet at comparatively lower acetyl contents.

The invention is illustrated by the following, non-limiting examples.

### Example 1

A solid wood sample was provided made from Radiata Pine. The dimensions were:
- Length: 100 cm;
- Width: 14 cm;
- Thickness: 2.5 cm.

For hot water extraction, the samples were impregnated with demineralized water in a vessel. For this impregnation the samples were submerged in the water while the system was evacuated to 50 mbara after which the pressure was returned to atmospheric; thereafter the pressure was increased. The applied extraction conditions were:
- Pressure: 2. 5 Barg;
- Temperature: 135°C;
- Duration: 4 hours.

After this process, the system was cooled and the water fraction was decanted; subsequently vacuum was pulled on the wet wood in order to remove large part of the remaining water containing the hemicellulose fraction. Thereafter the wood was are thermally dried to a moisture content below 5wt%..

This resulted in extracted solid wood, from which 13% to 15% by weight of hemicelluloses were removed. Thereupon, the extracted wood sample was impregnated with acetylation fluid and subjected to acetylation. Impregnation with acetylation fluid was performed by submerging the samples in the acetylation fluid while evacuating the system to 50 mbara; after that the pressure is returned to atmospheric. The applied acetylation conditions were:
- Acetylation fluid containing 92 wt.% acetic anhydride and 8 wt./% acetic acid;
- Pressure: 1.5 Barg;
- Temperature: 135°C;
- Duration: 4 hours.

The result, after removal of acetylation fluid and drying, was an acetylated solid wood sample that showed a remarkable mechanical integrity, without distortion, warping, or swell. The acetyl content of the sample was 16%.

It is noted that in this example neither the extraction conditions nor the acetylation conditions were specifically optimized. E.g., a higher extraction temperature (at a corresponding higher pressure) is preferred.

### Example 2

Samples (with dimensions of 50×50×5 mm³) were prepared from Radiata Pine. For hot water extraction, the samples were impregnated with demineralized water as follows: the samples were submerged in water at ambient temperature in a beaker, and the beaker was then placed in a desiccator which was evacuated while keeping the chips submerged. A vacuum of 50 mbar(a) was applied for 1h after which the system was brought back to atmospheric conditions. The samples were then transferred to an autoclave and excess water was added to submerge the samples. The autoclave was closed, evacuated and nitrogen was added to arrive at a pressure of 1 bar(g). The system was then heated to 160 °C and the pressure was increased to ca. 5 bar(g). The samples were treated for 5h. Then the water was removed. The samples were taken out of the autoclave and dried in the oven at 105 °C for 16h. Afterwards, the samples were weighed and stored in sealed bags for further use.

Next, the samples were impregnated with a 10/90 acetic acid/acetic anhydride mixture in a desiccator and under vacuum in the same manner as described above.

The samples were acetylated for 60 and 150 min at 130 °C. After the reaction, the samples were submerged in water to stop the reaction and convert the acetic anhydride to acetic acid. The samples were then dried in an oven at 105 °C for 16h.

### Example 3

A series of identical samples made from Radiata Pine as used in Example, were provided. These samples were not subjected to extraction. They are dried the same way at 105 °C for 16h, and were treated with 10/90 acetic acid/acetic anhydride the same way as the samples of Example 2.

### Example 4

The samples obtained in Example 2 (acetylated, extracted wood chips according to the invention) and example 3 (acetylated native wood chips, not according to the invention) were placed in a climate chamber which was regulated at 20 °C and 90% Relative Humidity. Also, 10 untreated and non-acetylated samples were acclimatised in the same way.

The samples remained in the climate chamber until the samples achieved a stable mass. The samples were then weighed on an analytical balance and dimensions (radial and tangential) were measured. After the measurements, all samples were placed in the oven at 105 °C for 16h after which the mass and dimensions were determined again. With these measurements the equilibrium moisture content (EMC) and the linear swell were calculated.

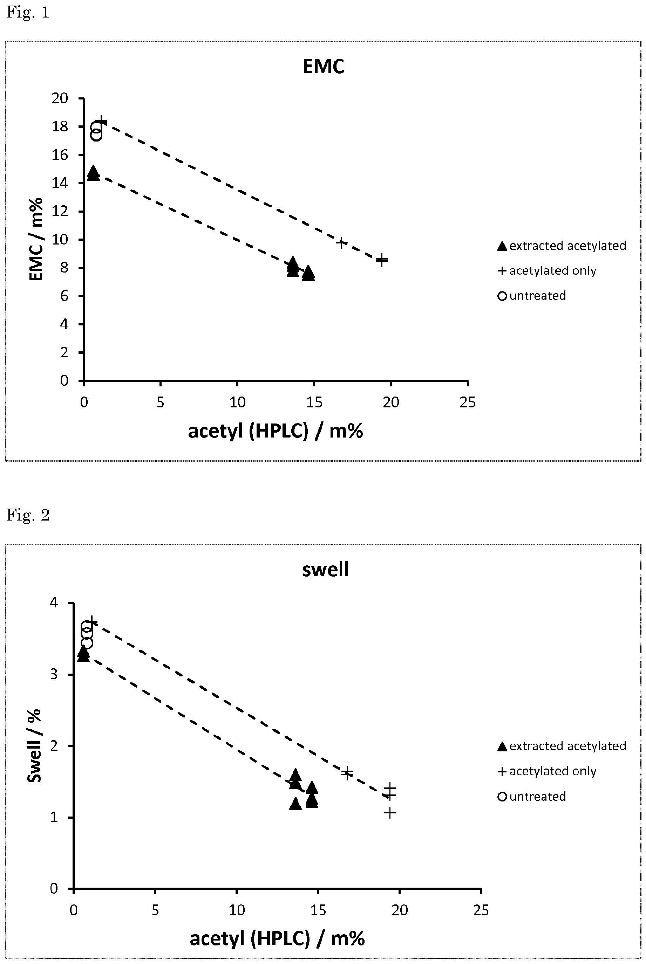

The results for EMC are depicted in Fig. 1, those for linear swell (tangential direction) in Fig. 2. Herein the wood samples tested are indicated as follows:
A extracted acetylated wood (in accordance with the invention);
+ acetylated wood (conventionally not extracted);
o untreated wood.

In Fig. 1 it can be seen that the EMC for the acetylated, extracted wood elements of the invention is lower than the EMC for the acetylated, non-extracted standard wood elements, even at lower acetyl contents.

In Fig. 2 it can be seen that a linear swell of a desirable value between 1 and 2% for the acetylated, extracted wood elements of the invention is obtained at a an acetyl content of below 15%. For the same values of linear swell, the acetylated, non-extracted standard wood elements require acetyl contents of close to 20%.

## Claims

1. A process for the acetylation of soft wood, comprising providing soft wood, subjecting the wood to an extraction step so as to provide extracted wood, and subjecting the extracted wood to contact with an acetylation agent, **characterized in that** the extraction step comprises contacting the wood with an extraction fluid having a pressure and temperature so as to conduct the extraction at a temperature of from 120°C to 250°C, preferably 140°C to 160°C, wherein the extraction fluid is water, and wherein the wood is dried before impregnation with acetylation fluid .

2. A process according to claim 1, wherein the soft wood is from coniferous trees, preferably pine.

3. A process according to claim 1, wherein the wood is dried to a moisture content of less than 8%, preferably in a range of from 0.5% to 4%.

4. A process according to any one of the preceding claims, wherein the wood is in the form of wood elements.

5. A process according to claim 4, wherein the wood elements are selected from the group consisting of wood chips, wood strands, wood particles, and mixtures thereof.

6. A process according to any one of the claims 1 to 3, wherein the wood is in the form of solid wood or wood veneers.

## Patentansprüche

1. Verfahren zur Acetylierung von Weichholz, umfassend Bereitstellen von Weichholz, Unterziehen des Holzes einem Extraktionsschritt, um extrahiertes Holz bereitzustellen, und Unterziehen des extrahierten Holzes dem Kontakt mit einem Acetylierungsmittel, **dadurch gekennzeichnet, dass** der Extraktionsschritt In-Kontakt-Bringen des Holzes mit einem Extraktionsfluid umfasst, mit einem Druck und einer Temperatur, um die Extraktion bei einer Temperatur von von 120 °C bis 250 °C, vorzugsweise 140 °C bis 160 °C, durchzuführen, wobei das Extraktionsfluid Wasser ist, und wobei das Holz vor Imprägnierung mit Acetylierungsfluid getrocknet wird.

2. Verfahren nach Anspruch 1, wobei das Weichholz von Nadelbäumen, vorzugsweise Kiefern, ist.

3. Verfahren nach Anspruch 1, wobei das Holz auf einen Feuchtigkeitsgehalt von weniger als 8 %, vorzugsweise in einem Bereich von von 0,5 % bis 4 %, getrocknet wird.

4. Verfahren nach einem der vorhergehenden Ansprüche, wobei das Holz in der Form von Holzelementen ist.

5. Verfahren nach Anspruch 4, wobei die Holzelemente ausgewählt sind aus der Gruppe, bestehend aus Holzspänen, Holzsträngen, Holzpartikeln, und Mischungen davon.

6. Verfahren nach einem der Ansprüche 1 bis 3, wobei das Holz in der Form von Massivholz oder Holzfurnieren ist.

## Revendications

1. Procédé d'acétylation de bois tendre, comprenant la fourniture de bois tendre, la soumission du bois à une étape d'extraction de sorte à fournir un bois extrait, et la soumission du bois extrait à un contact avec un agent d'acétylation, **caractérisé en ce que**
l'étape d'extraction comprend la mise en contact du bois avec un fluide d'extraction ayant une pression et une température de sorte à conduire l'extraction à une température de 120 °C à 250 °C, de préférence de 140 °C à 160 °C, dans lequel le fluide d'extraction est de l'eau, et dans lequel le bois est séché avant imprégnation avec le fluide d'acétylation.

2. Procédé selon la revendication 1, dans lequel le bois tendre provient de conifères, de préférence du pin.

3. Procédé selon la revendication 1, dans lequel le bois est séché à une teneur en humidité inférieure à 8 %, de préférence dans une plage de 0,5 % à 4 %.

4. Procédé selon l'une quelconque des revendications précédentes, dans lequel le bois est sous la forme d'éléments en bois.

5. Procédé selon la revendication 4, dans lequel les éléments en bois sont choisis dans le groupe constitué par les copeaux de bois, les fibres de bois, les particules de bois et des mélanges de ceux-ci.

6. Procédé selon l'une quelconque des revendications 1 à 3, dans lequel le bois est sous la forme de bois massif ou de placages de bois.
